# EUROPEAN PATENT APPLICATION

(11) **EP 4 557 115 A1**
(43) Date of publication of application: **21.05.2025**
(21) Application number: 24211178.9
(22) Date of filing: 06.11.2024
(51) Int. Cl.: G06F 16/16, G06F 16/182

(54) **IMAGE MOUNTING METHOD, APPARATUS, DEVICE, AND MACHINE-READABLE STORAGE MEDIUM**

(30) Priority: 15.11.2023 CN 202311525152
(71) Applicant: New H3C Technologies Co., Ltd., Hangzhou, Zhejiang 310052 (CN)
(72) Inventor: CHEN, Shuibin, Beijing, 100102 (CN)
(74) Representative: Zimmermann & Partner Patentanwälte mbB

(57) **Abstract**

Disclosed are an image mounting method, apparatus, electronic device, and machine-readable storage medium. The method includes: traversing directory structure information of a target folder, generating descriptive information based on the directory structure information, traversing file data information of the target folder, generating a mapping table based on the file data information; generating, in the data cache area, image format information based on the descriptive information, and mapping file data of the target folder to image data based on the mapping table; mounting the target folder to be mounted in the specified image format based on image header information and the image data. With the present disclosure, based on the specified image format as well as the directory structure and file data of the target folder, the image format information and image data corresponding to the image format are generated and mapped.

## Description

### TECHNICAL FIELD

The present disclosure relates to the field of communication, in particular, to , a method and an apparatus for mounting an image, a device, and a machine-readable storage medium.

### BACKGROUND

Keyboard Video Mouse (KVM) refers to the keyboard, video, and mouse, allowing a user to view images of a server through a management network and perform mouse and keyboard operations.

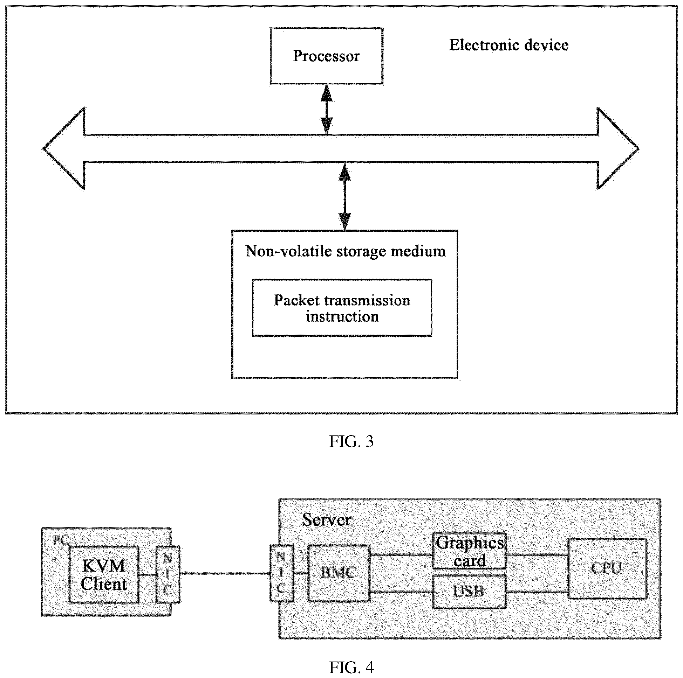

As shown in Figure 4, it is an exemplary system topology diagram of KVM. Video signals are output from the CPU on the host side to a graphics card, and then output to a Baseboard Management Controller (BMC). The BMC performs video encoding on the video signals and then sends encoded video signals to a KVM client through a network interface card of the BMC. The KVM client is an application program running on a PC. The KVM client communicates with the BMC through a network interface card (NIC). The BMC sends the encoded video signals from the host side to the KVM client, which decodes the encoded video signals and displays decoded video signals, so that images of sever are displayed on the PC. The KVM client transmits operations of the mouse and keyboard at the PC to the BMC through the network, which then transmits the mouse and keyboard operations to the CPU via USB protocol, so that the user may remotely operate on the PC.

In addition to the basic KVM functions mentioned above, the KVM client offers another function that allows mounting image files, such as .iso file, .nrg file, .ima file, .img file, or folders from the PC. The BMC emulates a virtual Universal Serial Bus (USB) optical drive using USB hardware resources. When the server attempts to read content on the virtual USB optical drive, the BMC converts USB protocol packets into Transmission Control Protocol (TCP) packets and sends the TCP protocol packets to the KVM client. Then local image file contents are read by the KVM client and returned to the BMC via a TCP protocol response packet, and the BMC converts the TCP protocol response packet into an USB protocol packet and returns the USB protocol packet to the server. Based on the SCSIPass-Through Interface (SPTI) protocol, the image files from the PC can be mounted on the server, enabling one-way file sharing between the PC and the server without deploying protocols such as CIFS, Samba, FTP, etc.

In one of the ways to mount a folder, an image file is created from the local files by the KVM client program and is shared with the host based on the aforementioned processes for mounting image files. However, it may cause that when there is more data in the local folder, the longer it takes to create the image file.

### SUMMARY

In view of this, the present disclosure provides a method and an apparatus for mounting an image, an electronic device, and a machine-readable storage medium, to improve the time-consuming issue of creating images for large amounts of data.

Specifically, the technical solutions are as follows:
The present disclosure provides a method for mounting an image, applied to a management server. The method includes: determining a target folder to be mounted, traversing directory structure information of the target folder, generating descriptive information matching a specified image format based on the directory structure information, traversing file data information of the target folder, generating a mapping table matching the specified image format based on the file data information; generating, in the data cache area, an image format information in the specified image format based on the descriptive information, and mapping file data of the target folder to image data in the specified image format based on the mapping table; mounting the target folder to be mounted in the specified image format based on an image header information and the image data.

As a technical solution, the specified image format is an ISO image format, and the image format information includes a Primary Volume Descriptor, a Volume Descriptor Set Terminator, a Path Table Record, a File Directory and a directory.

As a technical solution, the specified image format is an ISO image format, and the mapping table includes a file path, a starting Logical Block Address (LBA) corresponding to a file, a file size, and a partition capacity.

As a technical solution, the partition size is a positive integer multiple of a sector size, and an unused space of a partition corresponding to the partition capacity exceeding a stored file size is filled with preset data.

The present disclosure also provides an apparatus for mounting an image, applied to a management server. The apparatus includes: a first module for determining a target folder to be mounted, traversing directory structure information of the target folder, generating descriptive information matching a specified image format based on the directory structure information, traversing file data information of the target folder, and generating a mapping table matching the specified image format based on the file data information; a second module for generating, in the data cache area, image format information in the specified image format based on the descriptive information, and mapping file data of the target folder to image data in the specified image format based on the mapping table; a third module for mounting the target folder to be mounted in the specified image format based on image header information and the image data.

As a technical solution, the specified image format is an ISO image format, and the image format information includes a Primary Volume Descriptor, a Volume Descriptor Set Terminator, a Path Table Record, a File Directory and a directory.

As a technical solution, the specified image format is an ISO image format, and the mapping table includes a file path, a starting Logical Block Address (LBA) corresponding to a file, a file size, and a partition capacity.

As a technical solution, the partition size is a positive integer multiple of a sector size, and an unused space of a partition corresponding to the partition capacity exceeding a stored file size is filled with preset data.

The present disclosure also provides an electronic device, including a processor and a machine-readable storage medium. The machine-readable storage medium stores machine-executable instructions therein that can be executed by the processor. The processor executes the machine-executable instructions to carry out the aforementioned method for mounting an image.

The present disclosure also provides a machine-readable storage medium storing machine-executable instructions therein. The machine-executable instructions, when invoked and executed by a processor, cause the processor to carry out the aforementioned method for mounting an image.

The aforementioned technical solutions provided by the present disclosure bring at least the following beneficial effects:

The corresponding descriptive information and mapping table are generated based on the specified image format as well as the directory structure and file data of the target folder, and then the image format information and image data corresponding to the image format are generated and mapped, which allows a remote server to directly access file data within a local folder by accessing the mounted image, saving time in creating images and without the need to change the existing operating mode and protocol of KVM.

### BRIEF DESCRIPTION OF THE DRAWINGS

To provide a clear illustration of the technical solutions in the examples of the present disclosure or the prior art, the drawings required for describing the examples of the present disclosure or the prior art will be briefly introduced below. Obviously the drawings described below merely represent some examples recited in the present disclosure. For those skilled in the art, other drawings can also be obtained based on these drawings of the examples of the present disclosure.
Figure 1 is a schematic diagram of a method for mounting an image in one example of the present disclosure;
Figure 2 is a structural diagram of an apparatus for mounting an image in one example of the present disclosure;
Figure 3 is a hardware structural diagram of an electronic device in one example of the present disclosure;
Figure 4 is an exemplary system topology diagram of KVM.

Reference numbers: first module 21, second module 22, third module 23.

### DETAILED DESCRIPTION

The terms used in the examples of the present disclosure are for the purpose of describing particular examples and are not intended to limit the present disclosure. The use of the singular forms "a," "said," and "the" in the present disclosure and the claims are also intended to include the plural forms, unless the context clearly indicates otherwise. It should also be understood that the term "and/or" used herein refers to any or all possible combinations of one or more associated listed items.

It should be understood that although terms such as first, second, third, etc. may be used in the examples of the present disclosure to describe various information, such information should not be limited to these terms. These terms are merely used to distinguish information of the same type from each other. For example, without departing from the scope of the present disclosure, the first information can also be referred to as the second information, and similarly, the second information can also be referred to as the first information. Depending on the context, furthermore, the word "if" can be interpreted as "when" or "while" or "in response to the determination that...".

The present disclosure provides a method, apparatus, electronic device, and machine-readable storage medium for mounting an image to improve the above technical issues.

The specific technical solutions are described below.

In one example, the present disclosure provides a method for mounting an image applied to a management server. The method includes: determining a target folder to be mounted, traversing directory structure information of the target folder, generating descriptive information matching a specified image format based on the directory structure information, traversing file data information of the target folder, generating a mapping table matching the specified image format based on the file data information; generating, in a data cache area, image format information in the specified image format based on the descriptive information, and mapping file data of the target folder to image data in the specified image format based on the mapping table; and mounting the target folder to be mounted in the specified image format based on image header information and the image data.

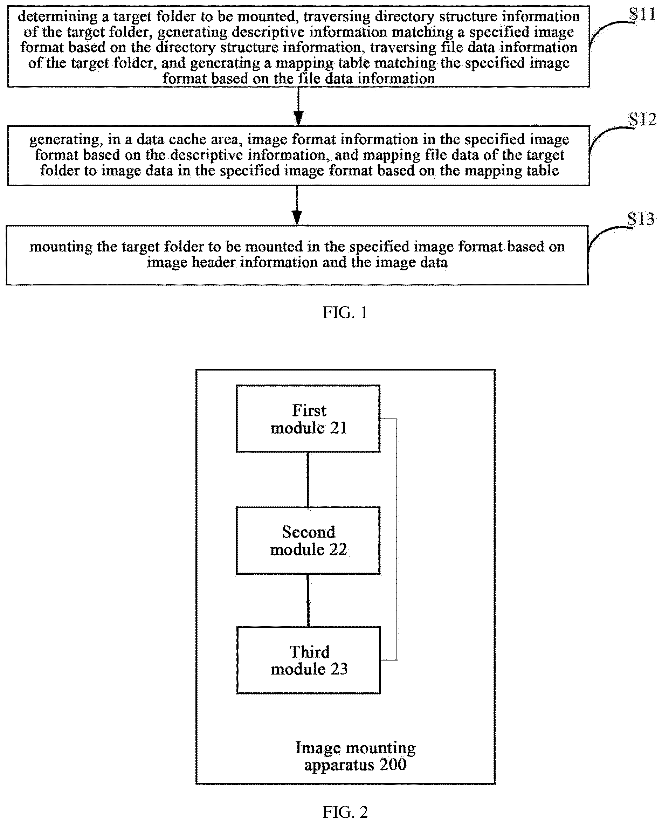

As shown in Figure 1, the method includes the following blocks:
Block S11: Determining a target folder to be mounted, traversing a directory structure information of the target folder, generating a descriptive information matching a specified image format based on the directory structure information, traversing file data information of the target folder, and generating a mapping table matching the specified image format based on the file data information.
Block S12: In a data cache area, generating image format information in the specified image format based on the descriptive information, and mapping file data of the target folder to image data in the specified image format based on the mapping table.
Block S13: Mounting the target folder to be mounted in the specified image format based on image header information and the image data.

Creating a complete image file is not required. Instead, the corresponding descriptive information and mapping table are generated based on the requirements of the specified image format as well as the directory structure and file data of the target folder, and further, the image format information and image data corresponding to the image format are generated and mapped. This allows a remote server to directly access file data within a local folder by accessing the mounted image, saving time in image creation and without the need to change the existing operating mode and protocol of KVM.

The specified image format can be any applicable image format such as .iso/.nrg/.ima/.img, etc. The following examples use ISO as the specified image format for further explanation.

In one example, the specified image format is an ISO image format, and the image format information includes a Primary Volume Descriptor, a Volume Descriptor Set Terminator, a Path Table Record, a File Descriptor and a Directory.

In one example, the specified image format is an ISO image format, and the mapping table includes a file path, a starting device Logical Block Address (LBA) corresponding to a file, a file size, and a partition capacity.

In one example, the partition capacity is a positive integer multiple of a sector size, and an unused space of a partition corresponding to the partition capacity exceeding a stored file size is filled with preset data.

In one example, when the server reads an image, Parameters of a read request received by a Baseboard Management Controller (BMC) mainly include a Logical Block Address (LBA) of the block device and the data length (DataLength). The KVM client can determine an offset of the accessed content on the image file based on the LBA of the block device and the sector size, and return the content about the corresponding area and size to the server. This read request is not applicable to direct access to a folder, so it is necessary to use the Logical Block Address (LBA) of the device to address the corresponding content of the folder.

A typical ISO image file includes a volume descriptor, a path table record, a file descriptor , a directory, and a data area. The volume descriptor can be divided into five types: the boot record, the primary volume descriptor, the secondary volume descriptor, the volume partition descriptor, and the volume descriptor set terminator. Among them, the primary volume descriptor and the volume descriptor set terminator are essential descriptors for constructing an ISO image file.

At the initial stage of folder mounting, the entire folder directory is traversed, and an "Image Header Area" containing a primary volume descriptor, a volume descriptor set terminator, a path table record, a file descriptor and a directory, is generated and stored in memory according to the ISO image file packaging rules. Then, the folder is traversed again, and the file content that should originally be saved in the "Data Area" of the ISO image file is saved in memory in the form of a mapping table. The mapping table includes at least the file path, the starting device logical block address (LBA) corresponding to the file, the file size, and the partition size.

When reading the image, the server uses the received logical block address (LBA) of the block device to find the corresponding path of a target file in the mapping table, and obtains the offset of the accessed content on the target file by calculating the difference between the LBA of the block device and a starting device LBA of the file. The corresponding data content is then returned to the server. Since the partition size must be a multiple of the sector size, the partition size is generally larger than the file size. When reading the last sector of the partition, the unused space of the partition corresponding to the partition capacity exceeding the file size is filled with \0.

In one example, as shown in Figure 2, the present disclosure also provides an apparatus 200 for mounting an image applied to a management server. The apparatus includes: a first module 21, for determining a target folder to be mounted, traversing directory structure information of the target folder, generating descriptive information matching a specified image format based on the directory structure information, traversing file data information of the target folder, and generating a mapping table matching the specified image format based on the file data information; a second module 22, for generating, in a data cache area, image format information in the specified image format based on the descriptive information, and mapping file data of the target folder to image data in the specified image format based on the mapping table; and a third module 23, for mounting the target folder to be mounted in the specified image format based on image header information and the image data.

In one example, the specified image format is an ISO image format, and the image format information includes a primary volume descriptor, a volume descriptor set terminator, a path table record, a file descriptor and a directory.

In one example, the specified image format is an ISO image format, and the mapping table includes a file path, a starting device logical block address (LBA) corresponding to a file, a file size, and a partition capacity.

In one example, the partition size is an integer multiple of a sector size, and an unused space of a partition corresponding to the partition capacity exceeding a stored file size is filled with preset data.

The implementation of the apparatus is the same or similar to the corresponding method implementation, and will not be repeated here.

In one example, the present disclosure provides an electronic device including a processor and a machine-readable storage medium. The machine-readable storage medium stores machine-executable instructions therein that can be executed by the processor, and the processor executes the machine-executable instructions to carry out the aforementioned method for mounting an image. From a hardware perspective, the hardware architecture diagram can be seen in Figure 3.

In one example, the present disclosure provides a machine-readable storage medium storing machine-executable instructions therein. The machine-executable instructions, when invoked and executed by a processor, cause the processor to carry out the aforementioned method for mounting an image.

Here, the machine-readable storage medium can be any electronic, magnetic, optical, or other physical storage device capable of containing or storing information such as executable instructions, data, and the like. For instance, the machine-readable storage medium can be: RAM (Random Access Memory), volatile memory, non-volatile memory, flash memory, storage drives (e.g., hard disk drives), solid-state drives, any type of storage discs (such as optical discs, DVDs, etc.), or similar storage media, or a combination thereof.

The systems, apparatus, modules, or units described in the above examples can be specifically implemented by computer chips or entities, or by products with certain functions. A typical implementation device is a computer, which can take the form of a personal computer, laptop, cellular phone, camera phone, smart phone, personal digital assistant, media player, navigation device, email device, game console, tablet computer, wearable device, or any combination of these devices.

For convenience of description, the above apparatus is described separately as various units based on their functions when describing the apparatus. Of course, when implementing the present disclosure, the functions of the various units can be realized in the same or multiple software and/or hardware.

It should be clear to those skilled in the art that examples of the present disclosure can be provided as methods, systems, or computer program products. Therefore, the present disclosure can be implemented in the form of a purely hardware example, a purely software example, or a combination of software and hardware aspects. Furthermore, examples of the present disclosure can be implemented in the form of computer program products on one or more computer-usable storage media (including but not limited to disk memory, CD-ROM, optical memory, etc.) containing computer-usable program codes.

The present disclosure is described with reference to schematic diagrams and/or block diagrams of methods, apparatus (systems), and computer program products according to examples of the present disclosure. It should be understood that each process and/or block in the schematic diagrams and/or block diagrams, as well as combinations of processes and/or blocks in the schematic diagrams and/or block diagrams, can be implemented by computer program instructions. These computer program instructions can be provided to a processor of a general-purpose computer, special-purpose computer, embedded processor, or other programmable data processing device to produce a machine, such that the instructions executed by the processor of the computer or other programmable data processing device produce a means for implementing the functions specified in one or more processes or blocks of the schematic diagrams and/or block diagrams.

Moreover, these computer program instructions can be stored in a computer-readable memory that can guide a computer or other programmable data processing device to work in a specific manner, such that the instructions stored in the computer-readable memory produce an article of manufacture that includes an instruction means that implements the functions specified in one or more processes or blocks of the schematic diagrams and/or block diagrams.

These computer program instructions can also be loaded onto a computer or other programmable data processing device, causing a series of operational steps to be performed on the computer or other programmable device to produce computer-implemented processing, whereby the instructions executed on the computer or other programmable device provide steps for implementing the functions specified in one or more processes or blocks of the schematic diagrams and/or block diagrams.

Those skilled in the art should understand that examples of the present disclosure can be provided as methods, systems, or computer program products. Therefore, the present disclosure can be implemented in the form of a purely hardware example, a purely software example, or a combination of software and hardware aspects. Moreover, the present disclosure can be implemented in the form of computer program products embodied on one or more computer-usable storage media (which may include but are not limited to disk memory, CD-ROM, optical memory, etc.) containing computer-usable program codes. The above-mentioned descriptions are merely examples of the present disclosure and are not intended to limit the present disclosure. For those skilled in the art, the present disclosure can have various modifications and changes. Any modifications, equivalent replacements, improvements, etc., made within the spirit and principle of the present disclosure should be included within the scope of the claims of the present disclosure.

## Claims

1. A method for mounting an image, applied to a management server, the method comprises:
determining a target folder to be mounted, traversing directory structure information of the target folder, generating descriptive information matching a specified image format based on the directory structure information, traversing file data information of the target folder, and generating a mapping table matching the specified image format based on the file data information;
generating, in a data cache area, image format information in the specified image format based on the descriptive information, and mapping file data of the target folder to image data in the specified image format based on the mapping table;
mounting the target folder to be mounted in the specified image format based on image header information and the image data.

2. The method according to claim 1, wherein the specified image format is an ISO image format, and the image format information comprises a primary volume descriptor, a volume descriptor set terminator, a path table record, a file descriptor and a directory.

3. The method according to claim 1, wherein the specified image format is an ISO image format, and the mapping table comprises a file path, a starting logical block address (LBA) corresponding to a file, a file size, and a partition capacity.

4. The method according to claim 3, wherein the partition capacity is a positive integer multiple of a sector size, and an unused space of a partition corresponding to the partition capacity exceeding a stored file size is filled with preset data.

5. An apparatus for mounting an image, applied to a management server, the apparatus comprises:
a first module, for determining a target folder to be mounted, traversing directory structure information of the target folder, generating descriptive information matching a specified image format based on the directory structure information, traversing file data information of the target folder, and generating a mapping table matching the specified image format based on the file data information;
a second module, for generating, in a data cache area, image format information in the specified image format based on the descriptive information, and mapping file data of the target folder to image data in the specified image format based on the mapping table;
a third module, for mounting the target folder to be mounted in the specified image format based on image header information and the image data.

6. The apparatus according to claim 5, wherein the specified image format is an ISO image format, and the image format information comprises a primary volume descriptor, a volume descriptor set terminator, a path table record, a file descriptor and a directory.

7. The apparatus according to claim 5, wherein the specified image format is an ISO image format, and the mapping table comprises a file path, a starting device logical block address (LBA) corresponding to a file, a file size, and a partition capacity.

8. The apparatus according to claim 7, wherein the partition capacity is a positive integer multiple of a sector size, and an unused space of a partition corresponding to the partition capacity exceeding a stored file size is filled with preset data.

9. An electronic device, comprising a processor and a machine-readable storage medium, wherein the machine-readable storage medium stores machine-executable instructions therein that can be executed by the processor, and the processor executes the machine-executable instructions to carry out any of the methods according to claims 1-4.

10. A machine-readable storage medium storing machine-executable instructions therein, wherein the machine-executable instructions, when invoked and executed by a processor, cause the processor to carry out any of the methods according to claims 1-4.
